# EUROPEAN PATENT APPLICATION

(11) **EP 2 985 692 A1**
(43) Date of publication of application: **17.02.2016**
(21) Application number: 15179156.3
(22) Date of filing: 30.07.2015
(51) Int. Cl.: G06F 9/44, G06F 9/445

(54) **METHOD AND APPARATUS FOR CONFIGURING A SOFTWARE APPLICATION**

(30) Priority: 12.08.2014 EP 14306270
(71) Applicant: Thomson Licensing, 92130 Issy-les-Moulineaux (FR)
(72) Inventor: Hall, William, London, SE17 3TR (GB); Stinson, David, Chiddingfold, GU84TS (GB)
(74) Representative: Schmidt-Uhlig, Thomas

(57) **Abstract**

A method and an apparatus for configuring a software application are described. First a context retrieving unit (22) retrieves (10) a context of a software application, the context comprising one or more qualifiers. Then a comparing unit (23) compares (11) the one or more qualifiers with nodes of a decision tree for determining a configuration identifier for the software application. Based on the determined configuration identifier a configuration value retrieving unit (24) retrieves (12) one or more configuration values for the software application. In order to generate the necessary decision tree, a configuration identifier determining unit (42) determines (30) one or more configuration identifiers associated to configuration values for a software application. An associating unit (43) then associates (31) the determined one or more configuration identifiers with nodes of the decision tree. The resulting decision tree is stored (32) in a storage unit (44).

## Description

### FIELD OF THE INVENTION

The invention relates to a method and an apparatus for configuring a software application. More specifically, a method and an apparatus for configuring a software application are described, which make use of a decision tree. The invention further relates to a method and an apparatus for generating such a decision tree.

### BACKGROUND OF THE INVENTION

All computer applications require configuration for successful operation. At its base level, configuration comprises of key/value pairs: an application makes a request to the configuration system using a key, and a value is returned.

A configuration set contains all key/value pairs from the system at a specific time. When a key value is updated or a new key/value added to the system, a new configuration set is created.

Software stacks of companies performing computationally intensive tasks, e.g. in the visual effects or movie post production business, often comprise several hundred unique software projects. These can be roughly categorized as:
1) Core libraries, e.g. compiled binaries, Python libraries, etc.
2) Production applications, e.g. those used by visual effects artists, either as stand-alone applications or to extend 3rd party applications. These depend upon core libraries.
3) System applications used to maintain the infrastructure of the company. These also depend on core libraries.

In order to achieve a stable system, it is necessary to ensure compatibility across all software components (API (Application Programming Interface) or otherwise). This is usually achieved with a package management system, e.g. RPM Package Manager, Debian package management system, Nix package manager, or Portage package management system. In the visual effects business the software stack presents a further requirement, namely the ability to define combinations of software components based on a qualitative decision. Examples for such qualitative decisions are:
1) Incorporate features only developed for a particular production.
2) Make use of newly developed features that are not yet considered production stable.
3) Isolate the software stack from all software changes, i.e. to guarantee software stability at the final stages of a production.
4) Integrate applications with different 3rd party libraries, e.g. physics engines.
5) License restrictions may differ between various production sites.
6) Hardware features may be different.

In order to ensure both software compatibility and the flexibility to customize workflows according to production needs, a powerful configuration management system is needed.

### SUMMARY OF THE INVENTION

It is an object of the present invention to propose a solution for managing configuration entries for a software application.

According to one aspect of the invention, a method for configuring a software application comprises:
- retrieving a context of a software application, the context comprising one or more qualifiers;
- comparing the one or more qualifiers with nodes of a decision tree for determining a configuration identifier for the software application; and
- retrieving one or more configuration values for the software application based on the determined configuration identifier.

Accordingly, an apparatus configured to configure a software application comprises:
- a context retrieving unit configured to retrieve a context of a software application, the context comprising one or more qualifiers;
- a comparing unit configured to compare the one or more qualifiers with nodes of a decision tree for determining a configuration identifier for the software application; and
- a configuration value retrieving unit configured to retrieve one or more configuration values for the software application based on the determined configuration identifier.

Also, a computer readable storage medium has stored therein instructions enabling configuring a software application, which when executed by a computer, cause the computer to:
- retrieve a context of a software application, the context comprising one or more qualifiers;
- compare the one or more qualifiers with nodes of a decision tree for determining a configuration identifier for the software application; and
- retrieve one or more configuration values for the software application based on the determined configuration identifier.

According to another aspect of the invention, a method for generating a decision tree enabling configuring a software application comprises:
- determining one or more configuration identifiers associated to configuration values for the software application;
- associating the determined one or more configuration identifiers with nodes of the decision tree; and
- storing the decision tree in a configuration management system.

Accordingly, an apparatus configured to generate a decision tree enabling configuring a software application comprises:
- a configuration identifier determining unit configured to determine one or more configuration identifiers associated to configuration values for the software application;
- an associating unit configured to associate the determined one or more configuration identifiers with nodes of the decision tree; and
- a storing unit configured to store the decision tree in a configuration management system.

Also, a computer readable storage medium has stored therein instructions enabling generating a decision tree enabling configuring a software application, which when executed by a computer, cause the computer to:
- determine one or more configuration identifiers associated to configuration values for the software application;
- associate the determined one or more configuration identifiers with nodes of the decision tree; and
- store the decision tree in a configuration management system.

The proposed solution is preferably implemented as a fully persistent configuration management system that stores values in a sparsely populated decision tree. The tree is navigated according to input qualifiers and favorably allows tracking changes made to the tree through versioning. The system provides the ability to define parallel software configuration sets from the matrix of all possibilities that ensures both software compatibility and the flexibility to customize workflows according to production needs.

For a better understanding the invention shall now be explained in more detail in the following description with reference to the figures. It is understood that the invention is not limited to any exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for configuring a software application;
- Fig. 2: schematically illustrates an apparatus configured to perform the method of Fig. 1;
- Fig 3: depicts a method according to the invention for generating a decision tree enabling configuring a software application; and
- Fig. 4: shows an apparatus configured to perform the method of Fig. 3.

### DETAILED DESCRIPTION OF PREFERED EMBODIMENTS

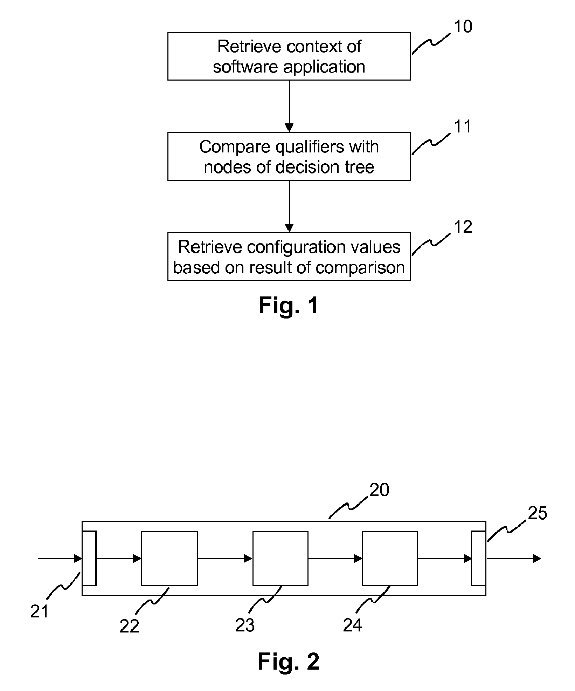

A method according to the invention for configuring a software application is schematically illustrated in Fig. 1. After retrieving 10 a context of a software application, the context comprising one or more qualifiers, the one or more qualifiers are compared 11 with nodes of a decision tree for determining a configuration identifier for the software application. Based on the determined configuration identifier one or more configuration values for the software application are retrieved 12.

Fig. 2 schematically illustrates an apparatus 20 configured to perform the method of Fig. 1. The apparatus 20 comprises an input 21 for receiving a request to retrieve one or more configuration values for a software application. First a context retrieving unit 22 retrieves 10 a context of the software application, the context comprising one or more qualifiers. Then a comparing unit 23 compares 11 the one or more qualifiers with nodes of a decision tree for determining a configuration identifier for the software application. Based on the determined configuration identifier a configuration value retrieving unit 24 retrieves 12 the one or more configuration values for the software application. Finally, the retrieved one or more configuration values are advantageously made available via an output 25. The various units 22, 23, 24 are either implemented as dedicated hardware or as software running on a processor. They may also be fully or partially combined in a single unit. Also, the input 21 and the output 25 may be combined into a single bi-directional interface.

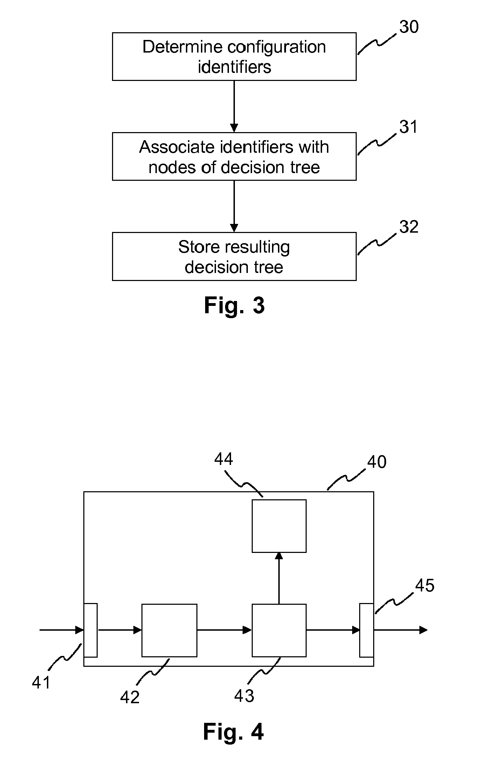

Fig. 3 depicts a method according to the invention for generating a decision tree enabling configuring a software application. First one or more configuration identifiers associated to configuration values for the software application are determined 30. The determined one or more configuration identifiers are then associated 31 with nodes of the decision tree. Finally, the resulting decision tree is stored 32.

An apparatus 40 configured to perform the method of Fig. 3 is schematically shown in Fig. 4. The apparatus 40 comprises an input 41 for receiving a request to generate a decision tree. A configuration identifier determining unit 42 then determines 30 one or more configuration identifiers associated to configuration values for a software application. An associating unit 43 associates 31 the determined one or more configuration identifiers with nodes of the decision tree. The resulting decision tree is stored 32 in a storage unit 44 of the apparatus 40. The storage unit 44 may likewise be external to the apparatus 40. Alternatively or in addition to storing 32 the decision tree, the decision tree is made available via an output 45. The determining unit 42 and the associating unit 43 are either implemented as dedicated hardware or as software running on a processor. They may also be combined in a single unit. Also, the input 41 and the output 45 may be combined into a single bi-directional interface.

In the following the proposed solution shall be explained in more detail with reference to a configuration management system in the field of movie post production or visual effects. Of course, the solution is not limited to this application.

A simple key/value configuration system only requires a key in order to return a value. For example, consider a software tool Tool_A that has 10 versions, v1 to v10. The system is queried for "version for Tool_A", and the value "v10" is returned. The proposed system extends this query by accepting qualifiers with the key:
software version for Tool_A, production "Foo"-> v10
software version for Tool_A, production "Bar"-> v9

The "production" qualifier describes the environment in which the query is being made. In this simple example, the configuration management system will define different versions for Tool_A for both productions. This qualifier is known as a "Context", which is a compound value, comprised of "elements". Advantageously, user-related "Contexts" are defined, which fully describe the users environment, including:
- Job (abbreviated production name)
- Role (artist, developer, manager)
- Scene (scene name, e.g. "build")
- Shot (shot name, e.g. "AFA_101")
- Department (e.g. "animation", "rigging", "modelling")
- Site (e.g. London, Vancouver, Montreal)

Not all context elements need to be defined for a query. Returning to the example above, valid queries for the configuration management system are, for example:
software version for Tool_A, Job=WWZ, Scene="build",
Shot="AFA_101", Site="London"-> v8
software version for Tool_A, Job=WWZ, Site="London"-> v9

The configuration management system uses the values in the context to resolve the query using a decision tree.

Configuration values are stored in a sparsely populated tree, each node of the tree representing a context element. For example, an arbitrary context tree is defined as follows, sparsely populated with configuration values for key "A":

| | | | |
|---|---|---|---|
| root | | | A=10 |
| \| - - | job (a) | | A=20 |
| \| | \| - - | scene(a) | |
| \| | \| | \| - - shot (a) | A=30 |
| \| | \| - - | scene(b) | A=40 |
| \| - - | job (b) | | |

The system is queried for the value of key A and presents a context:

| **context** | **value** |
|---|---|
| job(a) | set explicitly on node, returns 20 |
| job(a).scene(a) | inherits from job(a), returns 20 |
| job(a).scene(a).shot(a) | set explicitly on node, returns 30 |
| job(a).scene(b) | set explicitly on node, returns 40 |
| job(b) | inherits from root, returns 10 |

It is also valid for the decision tree to contain a single root node, e.g.

| root | |
|---|---|
| \| | A=1 |
| \| | C=2 |
| \| | D=2 |
| \| | E=2 |

In this case the input context is ignored, i.e. it matches the root by default, and just the input key is used to resolve the output value.

In one embodiment changes to the decision tree are recorded and versioned. For simplicity an incremental version number is assumed, though in reality it is favorably represented as a unique cryptographic hash. Each set of changes to the tree is represented as a version change at each node where the change occurs, and cascades up the tree to the root node. Any change to the tree will result in a new root node version. Using the example from above, but generalizing the context nodes, the following examples show the effect of changes to the configuration.

### Initial state:

| root [v1] | | | |
|---|---|---|---|
| \| | | | A=10 |
| \| - - | node_a [v1] | | A=20 |
| \| | \| - - | node_b [v1] | |
| \| | \| | \| - - node_c [v1] | A=30 |
| \| | \| - - | node_d [v1] | A=40 |
| \| - - | node_eb [v1] | | |

### Case 1: update to a single node

In this first example node_a.node_b.node_c is changed to A=31.

| root [v2] | | | |
|---|---|---|---|
| \| | | | A=10 |
| \| - - | node_a [v2] | | A=20 |
| \| | \| - - | node_b [v2] | |
| \| | \| | \| - - node_c [v2] | A=31 *update* |
| \| | \| - - | node_d [v1] | A=40 |
| \| - - | node_e [v1] | | |

### Case 2: addition of data to a node

Now a value A=50 is added to node_e.

| root [v3] | | | |
|---|---|---|---|
| \| | | | A=10 |
| \| - - | node_a [v2] | | A=20 |
| \| | \| - - | node_b [v2] | |
| \| | \| | \| - - node_c [v2] | A=31 |
| \| | \| - - | node_d [v1] | A=40 |
| \| -- | node_e [v2] | | A=50 *add* |

### Case 3: multiple changes still result in one new graph

Now node_e is changed to A=51, while node_d is changed to A=41.

| root [v4] | | | |
|---|---|---|---|
| \| | | | A=10 |
| \| - - | node_a [v3] | | A=20 |
| \| | \| - - | node_b [v2] | |
| \| | \| | \| - - node_c [v2] | A=31 |
| \| | \| - | node_d [v2] | A=41 *update* |
| \| - - | node_e [v3] | | A=51 *update* |

In one embodiment, configurations are comprised of many discrete domains. Examples of such domains are generic application settings, software versions, software paths, or syncing of assets to other sites. Each domain has its own tree, and it is usual for multiple domains to be used in a single application. For example, a C compiled application requires the file system path to the executable and the $LD_LIBRARY_PATH environment variable for dynamic linking during runtime. From the above, a combination of the domains related to generic application settings and software versions will be required. The relationship between these two domains is important and the system needs to be able to express the grouping of two discrete domain graphs together. For this purpose the decision trees are extended.

In the above description simple values (e.g. "10") were used, which were returned on a node according to a particular key ("A"). In order to address the issue of domains the proposed system permits the chaining together of domains such that the value on a node can contain a simple value ("10") or a reference to another graph, identified by a unique domain name ("Software versions") and the version of its root node. This allows to defer resolution for the required value to an explicit version of an external tree.

If the value on the node is a reference value, e.g. "Software versions, v99", then the original query, i.e. the context and the required key, is passed onto the referenced graph for resolution.

An example shall now be given. Consider the following values for key "A" at domain "X":

| root [v10] | | | |
|---|---|---|---|
| \| | | | A=15 |
| \| - - | job (a) | | A=25 |
| \| | \| - - | scene(a) | |
| \| | \| | \| - - shot (a) | A=35 |
| \| | \| - - | scene(b) | A=45 |
| \| - - | job (b) | | A=55 |
| \| | \| - - | scene(a) | A=65 |

and the following values for key "A" at domain "Y":

| root | |
|---|---|
| \| | A=10 |
| \| -- job(a) | A=20 |
| \| -- job(a). scene (b) | A=30 |
| \| -- job(b) | domainX.v10 (A) |
| \| -- job(b).scene(c) | A=40 |

Querying the values on domain Y yields:

| **context** | **value** |
|---|---|
| job (a) | set explicitly on node in domain Y, returns 20 |
| job(a).scene(a) | inherits from job(a), domain Y, returns 20 |
| job (b) | references domain X [v10], returns 55 |
| job(b). scene (a) | references domain X [v10], explicitly set on node, returns 65 |
| job(b). scene (c) | set explicitly on node in domain Y, returns 40 |

In one embodiment, a single, public, top level domain tree is provided, which serves as an entry point to access all configuration domains, the "configuration manager" domain. From there each domain is represented with a unique name, or *category.* Data in the configuration manager domain is only comprised of chained category domains.

The presented query will comprise of three components, which will now include the category, for example:
- context=job, scene, shot
- category='software versions'
- key='tool_A'.

An exemplary top level decision tree looks as follows:

| root [v1] | |
|---|---|
| \| | 'software versions'.v11 |
| \| | 'software paths'.v12 |
| \| | 'application settings'.v2 |
| \| | 'sync settings'.v100 |
| \| -- job(a) | 'application settings'.v3 |
| \| -- job (b) .scene(c) | 'software versions'.v10 |

The root node will define all domain categories in order to represent a complete configuration system.

When updates are made to configuration domains, the root node of the top level decision tree is updated to the latest version and a new version of the top level tree is generated. For example, a new software version configuration set is available as version v12:

| root [v2] | |
|---|---|
| \| | **'software versions'.v12** |
| \| | 'software paths'.v12 |
| \| | 'application settings'.v2 |
| \| | 'sync settings'.v100 |
| \| -- job(a) | 'application settings'.v3 |
| \| -- job (b) .scene(c) | 'software versions'.v10 |

This allows the flexibility to provide the latest available configuration information, whilst also allowing for stability when a context has defined a domain version explicitly.

## Claims

1. A method for configuring a software application, the method **comprising:**
- retrieving (10) a context of a software application, the context comprising one or more qualifiers;
- comparing (11) the one or more qualifiers with nodes of a decision tree for determining a configuration identifier for the software application; and
- retrieving (12) one or more configuration values for the software application based on the determined configuration identifier.

2. The method according to claim 1, **wherein** the decision tree comprises information about at least one of a version of the decision tree and versions of the configuration identifiers.

3. The method according to claim 1 or 2, **wherein** the decision tree is specific to a given domain.

4. The method according to claim 3, **wherein** the decision tree comprises a reference to a further decision tree.

5. An apparatus (20) configured to configure a software application, the apparatus (20) **comprising:**
- a context retrieving unit (22) configured to retrieve (10) a context of a software application, the context comprising one or more qualifiers;
- a comparing unit (23) configured to compare (11) the one or more qualifiers with nodes of a decision tree for determining a configuration identifier for the software application; and
- a configuration value retrieving unit (24) configured to retrieve (12) one or more configuration values for the software application based on the determined configuration identifier.

6. A computer readable storage medium having stored therein instructions enabling configuring a software application, which, when executed by a computer, cause the computer to:
- retrieve (10) a context of a software application, the context comprising one or more qualifiers;
- compare (11) the one or more qualifiers with nodes of a decision tree for determining a configuration identifier for the software application; and
- retrieve (12) one or more configuration values for the software application based on the determined configuration identifier.

7. A method for generating a decision tree enabling configuring a software application, the method **comprising:**
- determining (30) one or more configuration identifiers associated to configuration values for the software application;
- associating (31) the determined one or more configuration identifiers with nodes of the decision tree; and
- storing (32) the decision tree.

8. The method according to claim 7, **further** comprising providing the decision tree with information about at least one of a version of the decision tree and versions of the configuration identifiers.

9. The method according to claim 8, **wherein** the information about the version of the decision tree is updated when a new configuration identifier is added to the decision tree or when a configuration identifier is updated.

10. The method according to claim 8 or 9, **wherein** the information about a version of a configuration identifier is updated when the configuration identifier is updated.

11. The method according to one of claims 7 to 10, **further** comprising providing the decision tree with a reference to a further decision tree.

12. An apparatus (40) configured to generate a decision tree enabling configuring a software application, the apparatus (40) **comprising:**
- a configuration identifier determining unit (42) configured to determine (30) one or more configuration identifiers associated to configuration values for the software application;
- an associating unit (43) configured to associate (31) the determined one or more configuration identifiers with nodes of the decision tree; and
- a storage unit (44) configured to store (32) the decision tree.

13. A computer readable storage medium having stored therein instructions enabling generating a decision tree enabling configuring a software application, which, when executed by a computer, cause the computer to:
- determine (30) one or more configuration identifiers associated to configuration values for the software application;
- associate (31) the determined one or more configuration identifiers with nodes of the decision tree; and
- store (32) the decision tree.
